# EUROPEAN PATENT APPLICATION

(11) **EP 3 226 495 A1**
(43) Date of publication of application: **04.10.2017**
(21) Application number: 15875096.8
(22) Date of filing: 16.12.2015
(51) Int. Cl.: H04L 12/917, H04L 29/08

(54) **ALLOCATION METHOD, APPARATUS AND SYSTEM FOR CLOUD NETWORK COMMUNICATION PATH**

(30) Priority: 29.12.2014 CN 201410848105
(71) Applicant: Huawei Technologies Co., Ltd., Longgang District Shenzhen, Guangdong 518129 (CN)
(72) Inventor: YU, Qinghua, Shenzhen Guangdong 518129 (CN); YANG, Xinhua, Shenzhen Guangdong 518129 (CN)
(74) Representative: Pfenning, Meinig & Partner mbB
(86) International application number: PCT/CN2015/097605
(87) International publication number: WO 2016/107418

(57) **Abstract**

The present invention provides a method of communication in a cloudified network, an apparatus, and a system. The method includes: receiving, by a software-defined networking SDN controller, a communication path request message sent by a policy management apparatus, where the communication path request message carries address information of different communications nodes communication-connected to the policy management apparatus, and bandwidth requirement information and quality of service QoS requirement information that are of a communication path between the different communications nodes; allocating, by the SDN controller from a network resource managed by the SDN controller, a communication path meeting a bandwidth requirement and a QoS requirement to both the communications nodes according to the address information of the different communications nodes, and the bandwidth requirement information and the QoS requirement information that are of the communication path between the different communications nodes; and sending, by the SDN controller, a message carrying the communication path to a bearer network forwarding device, so as to establish the communication path between the different communications nodes by using the forwarding device. The foregoing technical solutions can meet a QoS requirement for communication and also avoid a waste of physical link resources in a bearer network. Therefore, network running efficiency and resource utilization are improved.

## Description

This application claims priority to Chinese Patent Application No. 201410848105.2, filed with the Chinese Patent Office on December 29, 2014 and entitled "METHOD FOR ALLOCATING COMMUNICATION PATH IN CLOUDIFIED NETWORK, APPARATUS, AND SYSTEM", which is incorporated herein by reference in its entirety.

### TECHNICAL FIELD

Embodiments of the present invention relate to the communications field, and specifically, to a method for allocating a communication path in a cloudified network, an apparatus, and a system.

### BACKGROUND

Telecommunications node cloudification means that a conventional telecommunications node and application based on a physical subrack and board are deployed on a universal data center server in a software virtual machine (VM) manner, to provide various telecommunication services to the outside. The deployment manner is referred to as network functions virtualization (Network Functions Virtualization, NFV) in the industry. One cloudified network may include multiple data centers. In a data center of the cloudified network, a telecommunications node and application are present in a form of a virtual machine (VM), instead of in a form of a board of conventional telecommunications hardware. Communication between nodes and communication between different service processes in one node are all represented as communication between VMs.

According to inherent characteristics of cloudification virtualization, a virtual machine may be flexibly deployed, and automatically expanded and reduced in capacity or migrated to another data center based on service load. In these cases, as a location and a capacity of a virtual machine change, a volume of communication traffic between data centers certainly also changes, and how to ensure communication quality of service (Quality of Service, QoS) becomes an urgent problem to be resolved.

In the prior art, before a VM is newly deployed in a data center, a bandwidth requirement and a QoS requirement for communication between the VM and a VM in another data center need to be calculated first; then, a virtual private network (Virtual Private Network, VPN) tunnel needs to be manually configured between access routers of the two data centers, and a tunnel QoS label and a required VPN bandwidth need to be set.

In the prior art, the manual configuration method cannot perfectly resolve a problem concerning QoS of communication between data centers in a condition that a service virtual machine is deployed in a cloudified network. To ensure QoS of communication between VMs after cloudification deployment is performed for a telecommunications network element, a new communication QoS solution architecture and technology need to be found.

### SUMMARY

To resolve a technical problem in the prior art, embodiments of the present invention provide a method for allocating a communication path in a cloudified network, an apparatus, and a system, which can ensure a QoS requirement for communication between different communications nodes in a cloudified network and improve bearer resource utilization efficiency.

Specifically, an embodiment of the present invention provides a method for allocating a communication path in a cloudified network, including:
receiving, by a software-defined networking SDN controller, a communication path request message sent by a policy management apparatus, where the communication path request message carries address information of different communications nodes communication-connected to the policy management apparatus, and bandwidth requirement information and quality of service QoS requirement information that are of a communication path between the different communications nodes;
allocating, by the SDN controller from a network resource managed by the SDN controller, a communication path meeting a bandwidth requirement and a QoS requirement to both the communications nodes according to the address information of the different communications nodes, and the bandwidth requirement information and the QoS requirement information that are of the communication path between the different communications nodes; and
sending, by the SDN controller, a message carrying the communication path to a bearer network forwarding device, so as to establish the communication path between the different communications nodes by using the forwarding device.

An embodiment of the present invention provides a software-defined networking SDN controller, including:
a receiving unit, configured to receive a communication path request message sent by a policy management apparatus, where the communication path request message carries address information of different communications nodes communication-connected to the policy management apparatus, and bandwidth requirement information and quality of service QoS requirement information that are of a communication path between the different communications nodes;
a path allocation unit, configured to allocate, from a network resource managed by the SDN controller, a communication path meeting a bandwidth requirement and a QoS requirement to both the communications nodes according to the address information of the different communications nodes, and the bandwidth requirement information and the QoS requirement information that are of the communication path between the different communications nodes; and
a sending unit, configured to send a forwarding flow table of the communication path to a forwarding device in the data center network, so as to establish the communication path between the different communications nodes by using the forwarding device.

An embodiment of the present invention provides a cloudified network system, including multiple different communications nodes, a policy management apparatus, an SDN controller, and a bearer network forwarding device, where
the policy management apparatus is configured to obtain location information of the different communications nodes, and a bandwidth requirement and a QoS requirement that are of a communication path between the different communications nodes, and send a communication path request message to the SDN controller;
the SDN controller is configured to: receive the communication path request message sent by the policy management apparatus, determine a communication path according to the bandwidth requirement and the QoS requirement that are carried in the communication path request message, and send a message carrying information about the determined communication path to the bearer network forwarding device; and
the bearer network forwarding device is configured to: receive the message carrying the information about the communication path and establish the bearer network communication path between the different communications nodes.

In the foregoing method, apparatus, and system, if one communications node in the different communications nodes is migrated, the communication path request message further carries migration event indication information of the migrated communications node and pre-migration address information of the migrated communications node. The SDN controller deletes a pre-migration communication path between the migrated communications node and another communications node according to the migration event indication information of the migrated communications node and the pre-migration address information of the migrated communications node.

In the foregoing method, apparatus, and system, when the bandwidth requirement and the QoS that are of the communication path between the different communications nodes are updated, the SDN controller receives a communication path update request message sent by the policy management apparatus.

In the foregoing method, apparatus, and system, the SDN controller reallocates, from the network resource managed by the SDN controller, a communication path to the different communications nodes according to the communication path update request message and the updated bandwidth requirement and the updated QoS.

In the foregoing method, apparatus, and system, the different communications nodes are separately located in different data center networks.

Based on the foregoing technical solutions, a policy management apparatus transfers location information of different communications nodes, and bandwidth requirement information and QoS requirement information to an SDN controller, and the SDN controller plans forwarding paths for the communications nodes in a unified manner, which meets a QoS requirement for communication and avoids a waste of physical link resources in a bearer network. Therefore, network running efficiency and resource utilization are improved, and further, communication QoS can be ensured after communications nodes across different data centers are deployed in cloudified data centers.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a cloudified network system architecture according to an embodiment of the present invention;
FIG. 2 is a schematic diagram of an SDN network architecture according to an embodiment of the present invention;
FIG. 3 is a flowchart of a method for allocating a communication path in a cloudified network;
FIG. 4 is a schematic interaction diagram of a method for allocating a communication path in a cloudified network;
FIG. 5 is an interaction flowchart of a method for allocating a communication path in a cloudified network;
FIG. 6 is another interaction flowchart of a method for allocating a communication path in a cloudified network;
FIG. 7 is a schematic structural diagram of an SDN controller according to an embodiment of the present invention;
FIG. 8 is another schematic structural diagram of an SDN controller according to an embodiment of the present invention; and
FIG. 9 is a schematic structural diagram of a cloudified network system according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For ease of understanding of the embodiments of the present invention, some elements to be introduced to descriptions of the embodiments of the present invention are first described herein.

Software-defined networking (SDN) is a new innovative network architecture in which a network device control plane is separated from a network device data plane to flexibly control network traffic.

SDN network topology information is stored in an SDN controller. The SDN controller can discover a network topology structure formed by network switches that include a software switch on a hypervisor and a hardware switch in a data center cabinet. The SDN controller transforms a network programming mode from a distributed mode (in which network devices that communicate with each other decide a communication path) into a centralized mode. The SDN controller may program for data forwarding of a network switch by using OpenFlow.

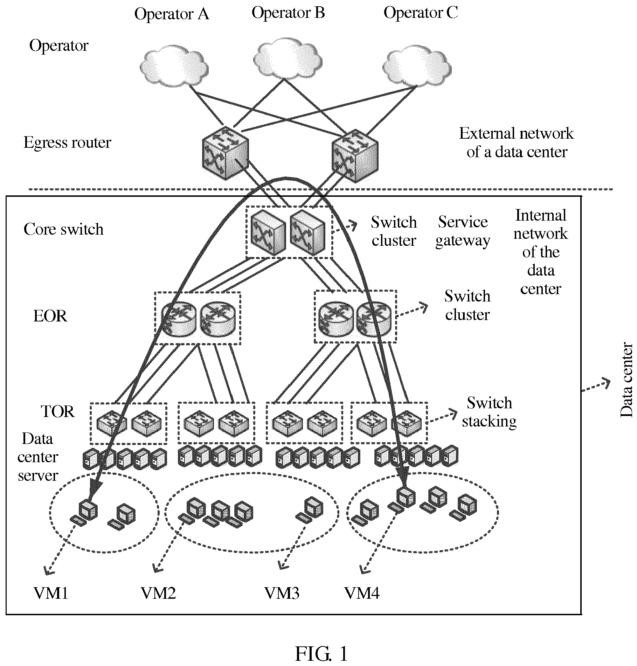

FIG. 1 is a schematic diagram of a cloudified network architecture according to an embodiment of the present invention. In a scenario shown in FIG. 1, a telecommunications node and application are present in a form of a virtual machine (VM), instead of in a form of a board of conventional telecommunications hardware. Communication between nodes and communication between different service processes in one node are all represented as communication between VMs. As shown in FIG. 1, a VM1, a VM2, a VM3, and a VM4 are all deployed on different servers in a data center. The servers in the data center are interconnected to provide a communication channel by using switches at different layers, such as a top of rack (Top of Rack, TOR) switch in the data center, an aggregation switch (End of Row, EOR) in the data center, and a core switch. A service gateway, including a firewall, a load balancer, and the like, is generally bypassed on the core switch during networking. A double-arrow solid line in the figure indicates inter-node VM communication.

According to cloud computing characteristics in a data center, a VM may be deployed and migrated randomly, which means that according to different VM deployment locations, inter-VM communication traffic may flow through a TOR, an EOR, and a core switch, or only a TOR and an EOR, or only a TOR; or traffic is merely inside a server. To meet a telecommunication service SLA standard, IP communication between these VMs must meet specific QoS requirements.

It should be understood that FIG. 1 is merely an application scenario of the embodiments of the present invention. FIG. 1 shows only one data center. It should be understood that a cloudified network may include multiple similar data centers and each data center includes different VMs. In addition, in actual application, there may be many variations. For example, a VM is replaced with a VNF (Virtualized Network Function, virtualized network function), or multiple network nodes may be added to or deleted from the network architecture shown in FIG. 1, which is not limited herein in this embodiment of the present invention.

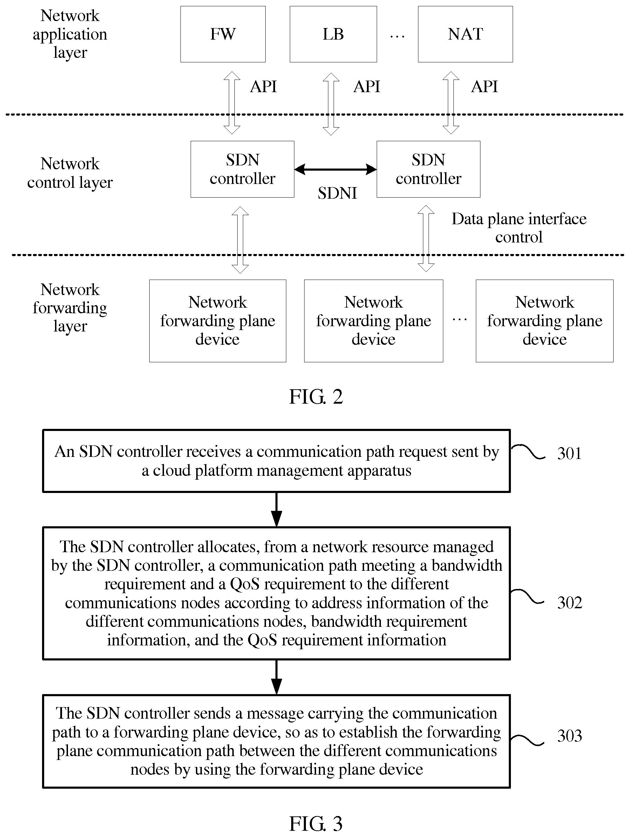

FIG. 2 is a schematic diagram of an SDN network architecture according to an embodiment of the present invention. A network application layer includes network applications such as an FW (firewall), an LB (Load Balancer), and NAT (Network Address Translation). In the SDN architecture, a network control plane is implemented centrally on an SDN controller (SDN Controller), a network forwarding plane is implemented on a bearer network forwarding device at an infrastructure layer, and the forwarding device is responsible only for packet forwarding, and is not responsible for communication path computation and maintenance. A specific communication path of each IP flow in the bearer network is controlled by the SDN controller and is sent, by using a data plane interface control protocol (for example, the OpenFlow protocol), to a forwarding layer device for execution. The communication path of each IP flow may be flexibly controlled by the SDN controller.

FIG. 3 is a flowchart of a method for allocating a communication path in a cloudified center network. The method in FIG. 3 is executed by an SDN controller.

301. The SDN controller receives a communication path request message sent by a policy management apparatus.

The communication path request message carries address information of different communications nodes, and bandwidth requirement information and QoS requirement information that are of a communication path between the different communications nodes. The communications node is a virtual machine (Virtual Machine, VM) or a virtualized network function entity (Virtualized Network Function, VNF).

It should be understood that, in this embodiment of the present invention, the different communications nodes include two or more different communications nodes. The different communications nodes, the policy management apparatus, and the SDN controller may be located in one data center network, or may be separately located in different data center networks. For example, the different communications nodes are located in different data center networks. One cloudified network may include multiple data centers, and routing or communication may be performed between different data centers and inside one data center by using a bearer network.

It should be understood that, in this embodiment of the present invention, the policy management apparatus may be a policy and charging rules function unit (Policy and Charging Rules Function, PCRF), a virtualized network function manager (Virtualized Network Function Manager, VNFM), or a system-wide coordination apparatus or a management and orchestration (Management and Orchestration, MANO) apparatus. The policy management apparatus manages the multiple different communications nodes and knows a bandwidth and QoS that are required for communication between every two communications nodes. The data may be automatically calculated according to a service type and a traffic volume traffic model that are of a communications node, or may be manually pre-configured according to a network planning and design solution.

It should be understood that, in this embodiment of the present invention, the address information may include not only direct address information such as a Media Access Control (Media Access Control, MAC) address and an Internet Protocol (Internet Protocol, IP) address, but also indirect address information such as identity information. Specifically, the address information of the communications node includes at least one of the following: an identity (Identity, ID) of the communications node, a MAC address of the communications node, an IP address of the communications node, an ID of a server on which the communications node is located, an ID of a local area network switch (LAN Switch, LSW) to which the communications node belongs, a MAC address of an LSW to which the communications node belongs, or an IP address of an LSW to which the communications node belongs.

It should be understood that the bandwidth requirement information of the communication path between the different communications nodes includes at least one of the following: a minimum guaranteed bandwidth or a maximum available bandwidth between the different communications nodes.

It should be understood that the QoS requirement information between the different communications nodes includes at least one of the following: a maximum allowable delay, maximum allowable jitter, or a maximum allowable packet loss rate between the different communications nodes.

In a specific example, the communication path request message may carry the following content: a MAC address of a node 1, a MAC address of a node 2, a minimum guaranteed bandwidth, a maximum available bandwidth, a maximum allowable delay, maximum allowable jitter, and a maximum allowable packet loss rate, for example, "28-6e-d4-88-c4-f8", "28-6e-d4-88-c5-03", 10 Mbps, 100 Mbps, 50 ms, 5 ms, and 0.01. It should be understood that the example about the communication path request message in this embodiment of the present invention is merely an example, and this embodiment of the present invention is not limited thereto.

302. The SDN controller allocates, from a network resource managed by the SDN controller, a communication path meeting a bandwidth requirement and a QoS requirement to the different communications nodes according to address information of the different communications nodes, and bandwidth requirement information and QoS requirement information that are of a communication path between the different communications nodes.

Specifically, network topology information, available bandwidth resource information, and QoS information of each communication path of a data center network are stored in the SDN controller. The SDN controller may allocate, from the network resource managed by the SDN controller, the communication path meeting the bandwidth requirement and the QoS requirement to the different communications nodes according to the address information of the different communications nodes, and the bandwidth requirement information and the QoS requirement information that are of the communication path between the different communications nodes and with reference to the network topology information, the available bandwidth resource information, and the QoS information of each communication path of the data center network.

303. The SDN controller sends a message carrying the communication path to a forwarding device, so as to establish the communication path between the different communications nodes by using the forwarding device.

In this embodiment of the present invention, a communication path between different communications nodes is allocated according to the following information sent by a policy management apparatus: address information of the different communications nodes, and bandwidth requirement information and QoS requirement information that are of a communication path between the different communications nodes, which can ensure a service requirement for communication between different communications nodes in a data center network and improve bearer resource utilization efficiency to some extent.

The forwarding device is located in a bearer network and can forward a data resource between different VMs in one data center and in different data centers.

It should be understood that the method in this embodiment of the present invention may be applied to multiple application scenarios.

Optionally, in an embodiment, the communication path request message may be used to request the SDN controller to establish a new communication path for the different communications nodes. In an application scenario of this embodiment of the present invention, one of the different communications nodes may be a newly deployed VM and prepares to establish communication with a VM on a peer node. In another application scenario of this embodiment of the present invention, a communication path has been established between a communications node and a peer node. Because a bandwidth requirement or a QoS requirement is changed or updated, a new communication path is required.

Optionally, in another embodiment, if one of the different communications nodes is migrated, for example, one communications node is migrated from one data center to another data center, the communication path request message further carries migration event indication information and pre-migration address information of the migrated node. In this case, step 302 is specifically implemented as follows: The SDN controller receives the communication path request message sent by the policy management apparatus, and the SDN controller allocates, from the network resource managed by the SDN controller, a post-migration communication path meeting the bandwidth requirement and the QoS requirement to the different communications nodes according to the migration event indication information, address information of the different communications nodes, and the bandwidth requirement information and the QoS requirement information that are of the communication path between the different communications nodes, and deletes a pre-migration communication path between the communications node and another communications node according to the pre-migration address information of the communications node. In this embodiment of the present invention, an SDN controller reallocates a communication path to a migrated communications node, so that a service carried by the communications node can be migrated without service communication interruption, which ensures uninterrupted service running, and improves system performance of a cloudified data center to some extent.

Optionally, in still another embodiment, the communication path request message further carries bandwidth or QoS change indication information. In this case, step 302 is specifically implemented as follows: The SDN controller receives the communication path request message sent by the policy management apparatus, and the SDN controller reallocates, from the network resource managed by the SDN controller, a communication path meeting a bandwidth requirement and a QoS requirement to the different communications nodes according to the bandwidth or QoS change indication information, the address information of the different communications nodes, and the bandwidth requirement information and the QoS requirement information that are of the communication path between the different communications nodes. In this embodiment of the present invention, an SDN controller reallocates a communication path to a communications node whose bandwidth is changed, so that when a bandwidth or QoS requirement of a communications node service is changed, a communication path at a bearer network forwarding plane can be dynamically adjusted. Therefore, a bandwidth and QoS of the communications node can be ensured, a service carried by the communications node can be guaranteed, and system performance of a cloudified data center is improved to some extent.

The following further describes the method in this embodiment of the present invention by using a specific embodiment.

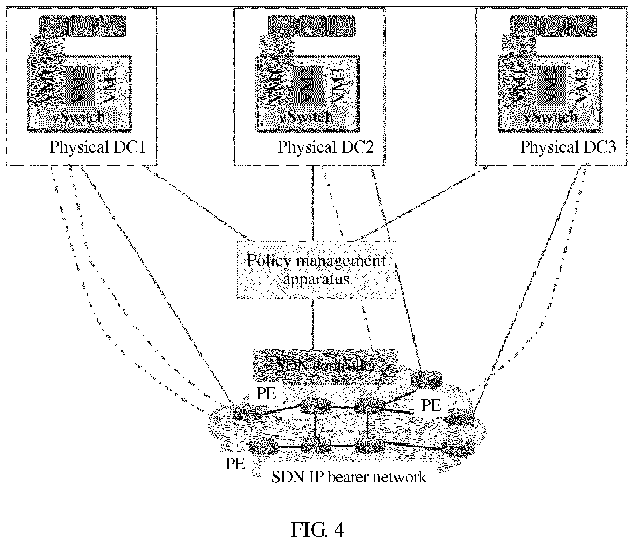

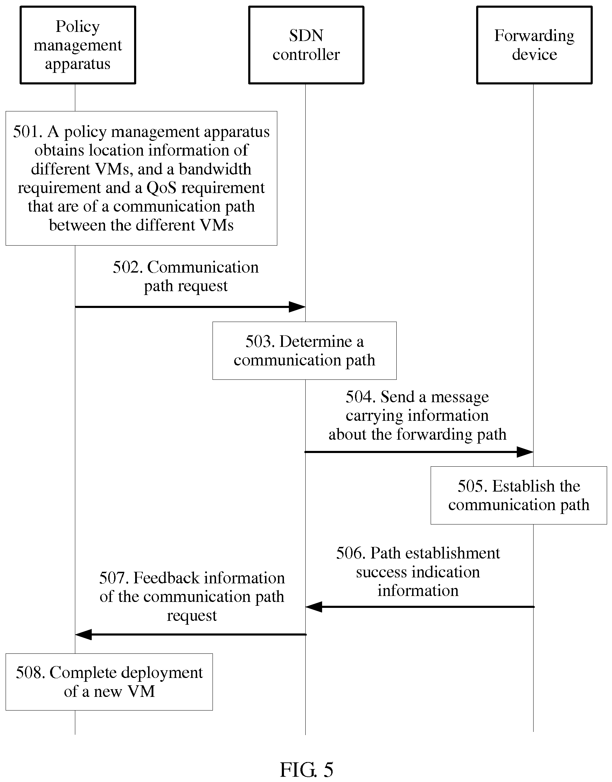

FIG. 4 is a schematic diagram of a method for allocating a communication path when a VM is newly added to a data center in a cloudified network. FIG. 5 is a corresponding flowchart. In this embodiment of the present invention, a policy management apparatus may be a PCRF or a VM manager. The policy management apparatus has a communications interface with each of three data centers (a DC1, a DC2, and a DC3) and is communication-connected to each of the three data centers. The policy management apparatus also has a corresponding communications interface with an SDN controller in an IP bearer network and is communication-connected to the SDN controller.

When a VM1 is newly added to the data center DC1, and the VM1 needs to communicate with a VM2 in the data center DC2 and a VM3 in the data center DC3, steps of the method in this embodiment of the present invention are as follows.

501. The policy management apparatus obtains location information of different VMs, and a bandwidth requirement and a QoS requirement that are of a communication path between the different VMs.

The newly added VM1 sends a request message to the policy management apparatus. The request message carries location information of the VM1, the VM2, and the VM3, and bandwidth requirements and QoS requirements that are of communication paths between the VM1 and the VM2 and between the VM1 and the VM3. Alternatively, the policy management apparatus proactively obtains, according to a policy of the policy management apparatus, location information of the VM1, the VM2, and the VM3, and bandwidth requirements and QoS requirements that are of communication paths between the VM1 and the VM2 and between the VM1 and the VM3.

502. The policy management apparatus sends a communication path request message to the SDN controller.

The policy management apparatus sends the communication path request message to the SDN controller, where the communication path request message carries the location information of the VM1, the VM2, and the VM3, and the bandwidth requirements and the QoS requirements that are of the communication paths between the VM1 and the VM2 and between the VM1 and the VM3.

503. The SDN controller determines a communication path.

Network topology information, available bandwidth resource information, and QoS information of each communication path are stored in the SDN controller.

After receiving the communication path request message, the SDN controller may determine the communication path between the different VMs according to a communication path algorithm of the SDN controller. A possible communication path calculation algorithm is as follows.

The SDN controller maintains a topology and available bandwidth resource data of an entire cloudified network, and collects QoS data of each communication path according to historical traffic statistics. After receiving the following information sent by the policy management apparatus: MAC addresses of a newly added node and a peer node between which a communication path needs to be newly established, a bandwidth requirement, and a QoS requirement, the SDN controller may select a communication path meeting a condition from a maintained bandwidth resource and QoS database, and modify the original available bandwidth resource data.

504. The SDN controller sends a message carrying information about the communication path to a bearer network forwarding device.

After determining the communication path, the SDN controller may send the message carrying the communication path to the bearer network forwarding device by using a data plane interface control protocol (for example, the OpenFlow protocol).

505. The bearer network forwarding device establishes the communication path.

After receiving the message carrying the communication path, the bearer network forwarding device establishes bearer network communication paths between the VM1 and the VM2 and between the VM1 and the VM3.

506. The forwarding device sends path establishment success indication information to the SDN controller.

After establishing the communication path, the forwarding device may send the path establishment success indication information to the SDN controller.

507. The SDN controller sends feedback information of the communication path request message to the policy management apparatus.

The SDN controller may send the feedback information of the communication path request message to the policy management apparatus, to indicate successful establishment of the communication path.

508. The policy management apparatus completes deployment.

After receiving the feedback information that indicates successful establishment of the communication path and that is fed back by the SDN controller, the policy management apparatus determines that establishment of the new communication paths for the VM1 is completed.

In this embodiment of the present invention, an SDN controller allocates communication paths to a newly deployed VM1, a peer VM2, and a peer VM3 according to the following information sent by a policy management apparatus: address information of the newly added VM1, address information of the peer VM2 and the peer VM3, and bandwidth requirement information and QoS requirement information that are of communication paths between the newly deployed VM1 and the VM2 and between the newly deployed VM1 and the VM3, so that a service requirement for communication between VMs in a data center network can be ensured and bearer resource utilization efficiency can be improved.

It should be understood that, in this embodiment of the present invention, the policy management apparatus further includes a VNFM, a MANO apparatus or a system-wide coordination apparatus, or the like that is commonly known in the art. For example, when the policy management apparatus is a VNFM, the communications node VM may be replaced with a VNF. Certainly, there may be other similar embodiments, and details are not described herein in this embodiment of the present invention.

Further, when deployment of a newly added VM is completed, and a bandwidth or QoS requirement of the newly added VM or another VM is changed, a communication path request message is also sent to a policy management apparatus. The policy management apparatus sends, to an SDN controller according to a post-change service requirement, the communication path request message that carries post-change address informtation of the VM, address information of a peer VM, bandwidth requirement information and QoS requirement information that are of a communication path for communication between the VMs, and the like. Correspondingly, the SDN controller determines a communication path and sends a message to a bearer network forwarding device, where the message carries information about the communication path. After receiving the message carrying the communication path, the bearer network forwarding device establishes the bearer network communication path.

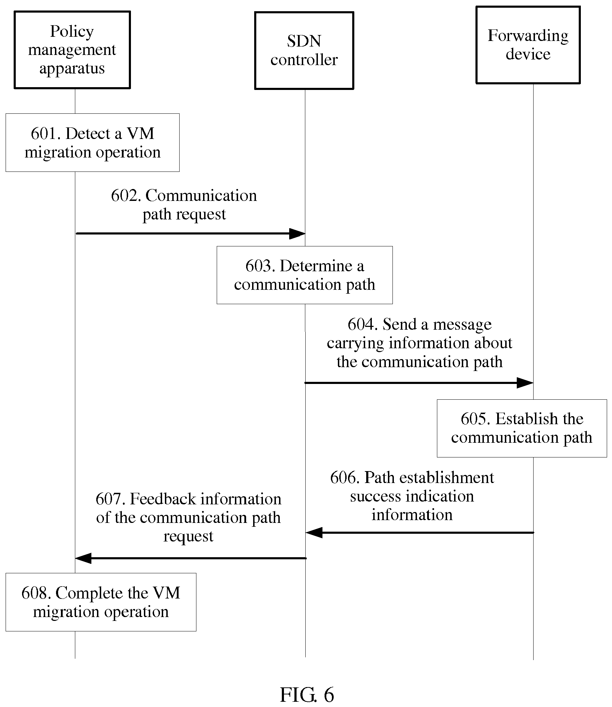

FIG. 6 is another interaction flowchart of a method for allocating a communication path in a cloudified network, and the method specifically includes the following steps.

601. A policy management apparatus detects a VM migration operation.

In a data center cloud environment, a migration process of a VM is controlled by the policy management apparatus. The policy management apparatus manages a bandwidth and QoS requirement when a VM is being deployed, and also manages a bandwidth and QoS requirement after a VM is migrated.

602. The policy management apparatus sends a communication path request message to an SDN controller.

Referring to FIG. 4, if a VM1 is migrated from a data center DC1 to a data center DC2, the policy management apparatus sends a communication path request message to the SDN controller to request to update a communication path for communication between a local node (the migrated VM1) and a peer node. The communication path request message may carry a VM1 migration event flag, pre-migration address information of the local node (pre-migration address information of the VM1), address information of the local node (post-migration address information of the VM1), address information of the peer node, bandwidth requirement information and QoS requirement information that are of a communication path, and the like.

In a specific example, the communication path request message may carry the following content: the VM1 migration event flag, a pre-migration MAC address of the local node (a pre-migration MAC address of the VM1), a MAC address of the local node (a post-migration MAC address of the VM1), a MAC address of the peer node, a minimum guaranteed bandwidth, a maximum available bandwidth, a maximum allowable delay, maximum allowable jitter, and a maximum allowable packet loss rate, for example, "01", "28-6e-d4-88-c4-22", "28-6e-d4-88-c4-f8", "28-6e-d4-88-c5-03", 10 Mbps, 100 Mbps, 50 ms, 5 ms, and 0.01, where "01" is a VM migration event flag. Certainly, in actual application, other information may be used as the VM1 migration event flag, which is not limited herein in this embodiment of the present invention.

It should be understood that the example about the communication path request message in this embodiment of the present invention is merely an example, and this embodiment of the present invention is not limited thereto.

603. The SDN controller determines a communication path.

After receiving the communication path request message, the SDN controller may determine the communication path between the local node (the migrated VM1) and the peer node according to a communication path algorithm of the SDN controller. A possible communication path calculation algorithm is as follows.

The SDN controller maintains a topology and available bandwidth resource data of an entire data center IP network, and collects QoS data of each communication path according to historical traffic statistics. After receiving the communication path request message sent by the policy management apparatus, the SDN controller may determine that the VM1 has experienced a migration event, select a communication path meeting a condition from a maintained bandwidth resource and QoS database, delete and release a communication path allocated before the VM1 is migrated, and modify the original available bandwidth resource data. The communication path request message may carry a VM1 migration event notification, the pre-migration MAC address of the local node (the pre-migration MAC address of the VM1), the MAC address of the local node (the post-migration MAC address of the VM1), the MAC address of the peer node, and a bandwidth requirement and a QoS requirement for communication.

604. The SDN controller sends a message carrying information about the communication path to a forwarding device.

605. The forwarding device establishes the communication path.

The forwarding device establishes the communication path between the local node (the migrated VM1) and the peer node of the local node and releases the communication path allocated before the local node (the VM1) is migrated.

606. The forwarding device sends path establishment success indication information to the SDN controller.

607. The SDN controller sends feedback information of the communication path request message to the policy management apparatus.

The method of step 606 and step 607 is similar to that of step 506 and step 507 in FIG. 5, and details are not described herein in this embodiment of the present invention.

608. The policy management apparatus completes the VM migration operation.

After the communication path is re-established successfully between the local node VM1 and the peer node, the VM1 migration operation is completed.

In this embodiment of the present invention, a communication path is allocated between a migrated VM1 and a peer VM according to the following information sent by a policy management apparatus: address information of the different communications nodes, and bandwidth requirement information and QoS requirement information that are of a communication path between the different communications nodes, which can ensure a service requirement for communication between the VM1 and the peer VM in a data center network without terminating a service and improve bearer resource utilization efficiency to some extent.

It should be understood that, in this embodiment of the present invention, alternatively, the policy management apparatus may be another apparatus, such as a VNFM or a MANO apparatus or a system-wide coordination apparatus. When the policy management apparatus changes, the communications node may be changed. For example, when the policy management apparatus is a VNFM, the VM may be replaced with a VNF. Certainly, there may be other similar embodiments, and details are not described herein in this embodiment of the present invention.

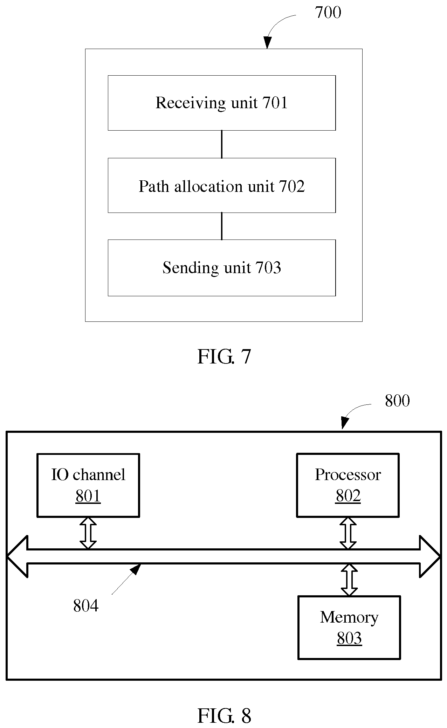

FIG. 7 is a schematic structural diagram of an SDN controller 700 according to an embodiment of the present invention. The SDN controller 700 may include:
a receiving unit 701, configured to receive a communication path request message sent by a policy management apparatus, where
the communication path request message carries address information of different communications nodes, and bandwidth requirement information and quality of service QoS requirement information that are of a communication path between the different communications nodes, and the communications node is a VM or a VNF;
a path allocation unit 702, configured to allocate, from a network resource managed by the SDN controller 700, a communication path meeting a bandwidth requirement and a QoS requirement to the different communications nodes according to the address information of the different communications nodes, and the bandwidth requirement information and the quality of service QoS requirement information that are of the communication path between the different communications nodes; and
a sending unit 703, configured to send a message carrying the communication path to a bearer network forwarding device, so as to establish the communication path between the different communications nodes by using the forwarding device.

Specifically, the SDN controller 700 may further include a storage unit in which network topology information, available bandwidth resource information, and QoS information of each communication path of different data center networks are stored. The path allocation unit 702 may allocate, from the network resource managed by the SDN controller 700, the communication path meeting the bandwidth requirement and the QoS requirement to the different communications nodes according to the address information of the different communications nodes, and the bandwidth requirement information and the QoS requirement information that are of the communication path between the different communications nodes and with reference to the network topology information, the available bandwidth resource information, and the QoS information of each communication path of the different data center networks.

The SDN controller 700 may further execute the method in FIG. 3 and implement specific functions of an SDN controller in embodiments shown in FIG. 3, FIG. 5, and FIG. 6. Details are not described herein in this embodiment of the present invention.

FIG. 8 is a schematic structural diagram of an SDN controller 800 according to an embodiment of the present invention. The SDN controller 800 may include a processor 802, a memory 803, and an IO channel 801.

The IO channel 801, the processor 802, and the memory 803 are interconnected by using a bus 804. A bus 804 may be an ISA bus, a PCI bus, an EISA bus, or the like. The bus may be classified into an address bus, a data bus, a control bus, and the like. For ease of representation, the bus 804 is represented by using only one double arrow in FIG. 8, which, however, does not mean that there is only one bus or one type of bus.

The memory 803 is configured to store a program. Specifically, the program may include program code, and the program code includes a computer operating instruction. In this embodiment, the memory 803 stores related programs of the foregoing method embodiments in FIG. 3, FIG. 5, and FIG. 6.

The processor 802 executes the program stored in the memory 803 and is specifically configured to perform the following operations:
obtaining address information of different communications nodes, and bandwidth requirement information and quality of service QoS requirement information that are of a communication path between the different communications nodes, where the different communications nodes may be VMs or VNFs;
allocating, from a network resource, a communication path meeting a bandwidth requirement and a QoS requirement to both the communications nodes according to the address information of the different communications nodes, and the bandwidth requirement information and the QoS requirement information that are of the communication path between the different communications nodes; and
sending a message carrying the communication path to a bearer network forwarding device, so as to establish the communication path between the different communications nodes by using the forwarding device.

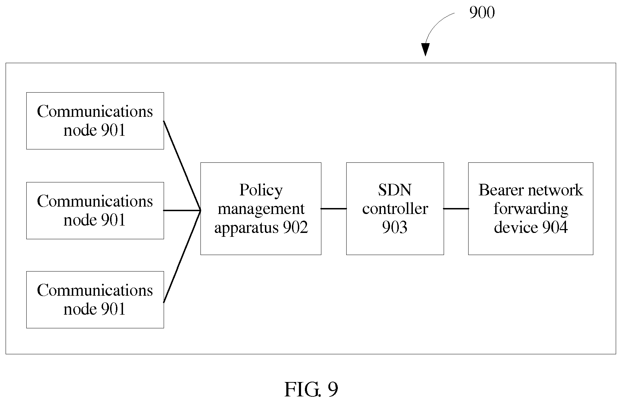

FIG. 9 is a schematic structural diagram of a cloudified network system 900 according to an embodiment of the present invention. The cloudified network system 900 includes communications nodes 901, a policy management apparatus 902, an SDN controller 903, and a bearer network forwarding device 904.

The policy management apparatus 902 is configured to obtain location information of different communications nodes 901 and a bandwidth requirement and a QoS requirement that are of a communication path between the different communications nodes 901, and send a communication path request message to the SDN controller 903.

The SDN controller 903 is configured to: receive the communication path request message sent by the policy management apparatus 902, and after a communication path is determined, send a message carrying information about the communication path to the bearer network forwarding device 904.

The bearer network forwarding device 904 is configured to establish the bearer network communication path between the different communications nodes 901 after receiving the message carrying the communication path.

The SDN controller 903 maintains a topology and available bandwidth resource data of an entire cloudified network, and collects QoS data of each communication path according to historical traffic statistics. After receiving the following information sent by the policy management apparatus 902: MAC addresses of a newly added node and a peer node between which a communication path needs to be newly established, a bandwidth requirement, and a QoS requirement, the SDN controller 903 may select a communication path meeting a condition from a maintained bandwidth resource and QoS database. In addition, the different communications nodes 901 may be separately located in different data center networks.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for allocating a communication path in a cloudified network, comprising:
receiving, by a software-defined networking SDN controller, a communication path request message sent by a policy management apparatus, wherein the communication path request message carries address information of different communications nodes communication-connected to the policy management apparatus, and bandwidth requirement information and quality of service QoS requirement information that are of a communication path between the different communications nodes;
allocating, by the SDN controller from a network resource managed by the SDN controller, a communication path meeting a bandwidth requirement and a QoS requirement to both the different communications nodes according to the address information of the different communications nodes, and the bandwidth requirement information and the QoS requirement information that are of the communication path between the different communications nodes; and
sending, by the SDN controller, a message carrying information about the communication path to a bearer network forwarding device, so as to establish the communication path between the different communications nodes by using the forwarding device.

2. The method according to claim 1, wherein if one communications node in the different communications nodes is migrated, the communication path request message further carries migration event indication information of the migrated communications node and pre-migration address information of the migrated communications node; and
the SDN controller deletes a pre-migration communication path between the migrated communications node and another communications node according to the migration event indication information of the migrated communications node and the pre-migration address information of the migrated communications node.

3. The method according to claim 1, wherein the method further comprises:
when the bandwidth requirement and the QoS requirement that are of the communication path between the different communications nodes are updated, receiving, by the SDN controller, a communication path update request message sent by the policy management apparatus; and
reallocating, by the SDN controller from the network resource managed by the SDN controller, a communication path to the different communications nodes according to the communication path update request message and the updated bandwidth requirement and the updated QoS.

4. The method according to claim 1, wherein the bandwidth requirement information of the communication path between the different communications nodes comprises at least one of the following: a minimum guaranteed bandwidth or a maximum available bandwidth.

5. The method according to claim 1, wherein the QoS requirement information between the different communications nodes comprises at least one of the following: a maximum allowable delay, maximum allowable jitter, or a maximum allowable packet loss rate between the different communications nodes.

6. The method according to claim 1, wherein the address information of the communications node comprises at least one of the following: an identity ID of the communications node, a Media Access Control MAC address of the communications node, an Internet Protocol IP address of the communications node, an ID of a server on which the communications node is located, an ID of a local area network switch LSW to which the communications node belongs, a MAC address of an LSW to which the communications node belongs, or an IP address of an LSW to which the communications node belongs.

7. The method according to any one of claims 1 to 6, wherein the communications node is a virtual machine VM.

8. The method according to any one of claims 1 to 6, wherein the different communications nodes are separately located in different data center networks.

9. A software-defined networking SDN controller, comprising:
a receiving unit, configured to receive a communication path request message sent by a policy management apparatus, wherein the communication path request message carries address information of different communications nodes communication-connected to the policy management apparatus, and bandwidth requirement information and quality of service QoS requirement information that are of a communication path between the different communications nodes;
a path allocation unit, configured to allocate, from a network resource managed by the SDN controller, a communication path meeting a bandwidth requirement and a QoS requirement to both the communications nodes according to the address information of the different communications nodes, and the bandwidth requirement information and the QoS requirement information that are of the communication path between the different communications nodes; and
a sending unit, configured to send a forwarding flow table of the communication path to a forwarding device in a data center network, so as to establish the communication path between the different communications nodes by using the forwarding device.

10. The SDN controller according to claim 9, wherein the bandwidth requirement information of the communication path between the different communications nodes comprises at least one of the following: a minimum guaranteed bandwidth or a maximum available bandwidth.

11. The SDN controller according to claim 9, wherein the QoS requirement information between the different communications nodes comprises at least one of the following: a maximum allowable delay, maximum allowable jitter, or a maximum allowable packet loss rate between the different communications nodes.

12. The SDN controller according to any one of claims 9 to 11, wherein the different communications nodes are separately located in different data center networks.

13. A cloudified network system, comprising multiple different communications nodes, a policy management apparatus, an SDN controller, and a bearer network forwarding device, wherein
the policy management apparatus is configured to obtain address information of
the different communications nodes, and a bandwidth requirement and a QoS requirement that are of a communication path between the different communications nodes, and send a communication path request message to the SDN controller;
the SDN controller is configured to: receive the communication path request message sent by the policy management apparatus, determine a communication path according to the bandwidth requirement and the QoS requirement that are carried in
the communication path request message, and send a message carrying information about the determined communication path to the bearer network forwarding device; and
the bearer network forwarding device is configured to: receive the message carrying the information about the communication path and establish the bearer network communication path between the different communications nodes.

14. The system according to claim 13, wherein bandwidth requirement information of the communication path between the different communications nodes comprises at least one of the following: a minimum guaranteed bandwidth or a maximum available bandwidth.

15. The system according to claim 13, wherein QoS requirement information between the different communications nodes comprises at least one of the following: a maximum allowable delay, maximum allowable jitter, or a maximum allowable packet loss rate between the different communications nodes.

16. The system according to any one of claims 13 to 15, wherein the different communications nodes are separately located in different data center networks.
